# EUROPÄISCHE PATENTSCHRIFT

(11) **EP 1 687 585 B1**
(45) Veröffentlichungstag und Bekanntmachung des Hinweises auf die Patenterteilung: **23.04.2008**
(21) Anmeldenummer: 04819252.0
(22) Anmeldetag: 24.11.2004
(51) Int. Cl.: G01B 5/255, G01B 7/315, G01B 11/275

(54) **LENKRADMESSWAAGE**
STEERING WHEEL MEASURING SCALES
DISPOSITIF DE MESURE POUR LE POSITIONNEMENT D'UN VOLANT

(30) Priorität: 28.11.2003 DE 10356290
(43) Veröffentlichungstag der Anmeldung: 09.08.2006
(73) Patentinhaber: SIEMENS AKTIENGESELLSCHAFT, 80333 München (DE)
(72) Erfinder: JAHN, Lars, 90431 Nürnberg (DE)
(86) Internationale Anmeldenummer: PCT/EP2004/053077
(87) Internationale Veröffentlichungsnummer: WO 2005/052504

(56) Entgegenhaltungen:
- DE-A1- 3 642 042
- US-A- 4 893 413
- US-A- 6 076 269

## Beschreibung

Die Erfindung betrifft eine Lenkradmesswaage, die Mittel zur Erfassung der Winkelstellung eines Lenkrades aufweist.

Lenkradmesswaagen der oben genannten Art werden bei der Fertigung von Fahrzeugen eingesetzt. Dabei werden diese insbesondere dann benötigt, wenn nach Fertigstellung des Fahrwerkes die so genannte Achsgeometrie des Fahrzeuges eingestellt werden muss. Dabei werden Fahrwerksgeometriewerte wie z.B. der Sturz der Räder pro Achse bzw. die Spur der Achsen eingestellt. Vor Beginn diesen Einstellungen ist entweder sicherzustellen, dass das Lenkrad des Fahrzeugs absolut waagerecht steht, oder es ist zumindest die Abweichung der aktuellen Lenkradstellung von der idealen waagerechten Lage winkelmäßig zu erfassen und bei der Einstellung der Achsgeometrie zu berücksichtigen.

Die US 4,893,413 A offenbart eine Zentriereinrichtung zur Befestigung an einem Lenkrad, um Abweichungen der Position des Lenkrads von einer zentralen Position zu erfassen.

In der US 6,076,269 A ist ein elektrisch mechanisches Niveliergerät beschrieben, dass zur Ermittlung von Lageabweichungen eines Lenkrads von einer zentralen Position dient. Das Gerät wird durch ein Gehäuse mit zwei Schiebearmen gehalten. Hierzu befinden sich an den Enden der Arme Nocken, die sich an der Innenfläche des Lenkrad-Kranzes anlegen.

In der DE 36 42 042 A1 ist eine Hilfsvorrichtung zur Lenkungsjustierung offenbart. Dabei greift eine zur Fixierung des Lenkhandrades dienende Einspannvorrichtung einerseits formschlüssig an den Speichen des Lenkhandrades an und stützt sich andererseits mittels einer Abstützplatte an der Armaturentafel des Fahrzeugs ab. Zum Ausrichten der gelenkten Fahr zeugräder in Grad-AUS-Stellung ist wenigstens eine an den Radnaben befestigte Winkelmessvorrichtung mit an nicht gelenkten Teilen des Fahrzeug-Fahrgestelles anliegenden Weggebern vorgesehen.

Aus der DE 299 06 813 U1 ist bereits eine Lenkradwaage bekannt. Diese weist ein Inklinometer zur Erfassung der Neigung der Ist- Symmetrielage gegenüber der Soll- Symmetrielage eines Lenkrades auf. Weiterhin ist eine elektronische Vorrichtung zur Umwandlung der analogen Messwerte des Inklinometers in digitale Werte und ein Sender zur Übermittlung der digitalen Werte an einen Steuerrechner vorhanden. Die Lenkradwaage ist dabei durch zwei Bügel von der Lenkradmitte distanziert. Die Lenkradwaage ist dabei derart ausgebildet, dass die Bügel symmetrisch zwangsgeführt werden. Eine derartige Ausführung ermöglicht ein zentriertes Befestigen der Lenkradwaage. Die drahtlose Lenkradwaage kann somit außerhalb des Entfaltungsbereiches eines Airbags angebracht werden.

Die aus der DE 299 06 813 U1 bekannte Lenkradwaage weist den Nachteil auf, dass die Zwangsführung der Bügel weitergehend durch die Gewichtskraft des Geräts bewirkt wird, und allenfalls durch die von einem Werker bei der Handhabung des Geräts ausgeübten Kräfte unterstützt wird. Damit ist insbesondere bei einer schnell laufenden Fertigung nicht sichergestellt, dass die Lenkradwaage immer in der gleichen Weise auf das Lenkrad eines Fahrzeuges aufgesetzt wird. Insbesondere kann es nicht vollständig ausgeschlossen werden, dass das Gerät in einer unerwünschten Schräglage auf bzw. in dem Lenkrad verklemmt. Dies wird von Werkern während der Fertigung nicht immer bemerkt. In diesem Falle würde ein falscher Lenkradwinkel erfasst werden, was wiederum eine nicht korrekte Achsgeometrieeinstellung zur Folge hat. Derartige Fahrzeuge sind häufig Gegenstand von Kundenbeanstandungen und müssen nachgebessert werden.

Der Erfindung liegt somit die Aufgabe zu Grunde, eine Lenkradmesswaage weiter so zu gestalten, dass eine ordnungsgemäße Einlage erleichtert wird. Eine weitere Aufgabe liegt darin, eine mögliche Fehlauflage der Lenkradmesswaage auf einem Lenkrad automatisch erfassen und daraufhin einen Werker mit einer Warnmeldung versehen zu können.

Die Aufgabe wird gelöst mit einer Lenkradmesswaage der oben genannten Art. Diese weist zum einen ein Gehäuse auf, das zur Auflage auf einem oberen Bereich eines Lenkradkranzes vorgesehen ist, und erste Klemmmittel, welche vom einem unteren Bereich des Gehäuses derart elektromotorisch ausfahrbar sind, dass diese mit dem Lenkradkranz verklemmen.

Mit dieser Gestaltung wird eine korrekte Einlegbarkeit einer Lenkradmesswaage in eine Lenkrad erheblich erleichtert und damit die Gefahr versehentlicher schräger Einspannungen reduziert. Die Lenkradmesswaage kann also in einer Art eingefahrenen Zustand bzw. Ruhezustand von einem Werker auf einen Lenkradkranz gelegt werden. Da dabei noch keine Spannkräfte auftreten, kann der Werker die Lenkradmesswaage absolut verklemmungsfrei durch einfache Auflage auf einem Lenkradkranz plazieren. Dabei ist auch noch eine optische Kontrolle und gegebenenfalls eine Anpassung der Position der Lenkradmesswaage durch den Werker möglich. Erst nach dieser Vorpositionierung wird das elektromotorische Ausfahren der ersten Klemmmittel durch den Werker bevorzugt durch eine Betätigung einer entsprechenden Taste ausgelöst.

Da Lenkräder in aller Regel über eine zur vertikalen Achse symmetrische Geometrie verfügen, weisen die ersten Klemmmittel der Lenkradmesswaage vorteilhaft zwei elektromotorisch synchron ausfahrbare Klemmarme auf. Hiermit ist bei Erreichen der Endstellungen eine sichere und schnelle Verklemmung mit dem Lenkradkranz erreichbar, so dass ein Werker dann die Anordnung nicht mehr händisch stützen muss. Falls ein Lenkrad ausnahmsweise eine sehr komplexe Oberflächengeometrie aufweisen sollte, bzw. z.B. bedingt durch Anbauten geringfügig unsymmetrisch sein sollte, so können die beiden Klemmarme im Ausnahmefall auch nacheinander ausgefahren werden. Dabei muss ein Werker allerdings länger die auf dem Lenkradkranz aufliegende Lenkradmesswaage manuell abstützen, bis die vollständige Verklemmung eingetreten ist.

Vorteilhaft ist die Lenkradmesswaage so gestaltet, dass die Klemmarme beidseitig vom Gehäuse nach unten abgehend ausfahrbar sind. Bevorzugt sind dabei zusätzlich Führungsstutzen für die Klemmarme am Gehäuse vorhanden. Bei einer bevorzugten Ausführungsform sind die Klemmarme in Form von Teleskopstangen aufgeführt, an deren Enden Klemmrollen quer zur Ausfahrrichtung angeordnet sind. Vorteilhaft sind dabei die ersten Klemmmittel derart elektromotorisch ausfahrbar sind, dass diese auf der Innenseite des Lenkradkranzes verklemmen.

Es ist vorteilhaft, wenn die ersten Klemmmittel der Lenkradmesswaage derart elektromotorisch ausfahrbar sind, dass diese an Übergängen des Lenkradkranzes zu Lenkradspeichen verklemmen. Hiermit ist sowohl ein besonders fester als auch optimaler gerader Sitz der Lenkradmesswaage auf dem Lenkrad ohne versehentlichen Fehlwinkel möglich. Besonders vorteilhaft die sind ersten Klemmmittel derart elektromotorisch ausfahrbar, dass diese an den oberhalb der Lenkradnabe liegenden Übergängen des Lenkradkranzes zu Lenkradspeichen verklemmen. Diese Übergänge entsprechen in etwa denjenigen Nischen, welche von einem Fahrer eines Fahrzeugs genutzt werden, um beim Lenkvorgang die Hände am Lenkradkranz zu platzieren.

Zur Lösung der weiteren Aufgabe weist die erfindungsgemäße Lenkradmesswaage eine Regelung für die beim elektromotorischen Ausfahren der ersten Klemmmittel aufgebrachten Momente auf. Hiermit kann die Kraft, mit der die ersten Klemmmittel, d.h. bevorzugt die beiden ausfahrbaren Klemmarme, verklemmend insbesondere auf den Lenkradkranz einwirken, entsprechend einem Sollwert eingestellt werden. Es wird damit einerseits ein fester Sitz der Lenkradmesswaage und damit eine sichere Messposition erreicht, andererseits aber mögliche Beschädigungen des Lenkrades vermieden.

Bei einer vorteilhaften, weiteren Ausführung der Erfindung weist die Lenkradmesswaage Mittel zur Messung der Ausfahrzeit der ersten Klemmmittel, Mittel zur Bestimmung der Ausfahrlängen der ersten Klemmmittel aus der gemessenen Ausfahrzeit und einem vorgegebenen Sollwert der Ausfahrgeschwindigkeit, Mittel zum Vergleich der bestimmten Ausfahrlängen mit vorgegebenen Sollwerten und Mittel zur Signalisierung auf, falls beim Vergleich unzulässige Abweichungen der bestimmten Ausfahrlängen von den Sollwerten auftreten sollten.

Mit dieser Ausführung kann auf eine einfache Weise festgestellt werden, ob die ersten Klemmmittel wegen einer unsachgemäßen Auflage auf dem Lenkrad nach dem elektromotorischen Ausfahren schräg aufsitzen und somit die Gefahr einer Fehlmessung bei der Bestimmung des Lenkradwinkels besteht.

Bei einer alternativen Ausführung weist die erfindungsgemäße Lenkradmesswaage Mittel zur Messung der Ausfahrlängen der ersten Klemmmittel, Mittel zum Vergleich der gemessenen Ausfahrlängen mit vorgegebenen Sollwerten, und Mittel zur Signalisierung auf, falls beim Vergleich unzulässige Abweichungen der gemessenen Ausfahrlängen von den Sollwerten auftreten sollten.

Mit dieser Ausführung kann auf eine sehr genaue Weise festgestellt werden, ob die ersten Klemmmittel wegen einer unsachgemäßen Auflage auf dem Lenkrad nach dem elektromotorischen Ausfahren schräg aufsitzen und somit die Gefahr einer Fehlmessung bei der Bestimmung des Lenkradwinkels besteht. Vorteilhaft ist hierzu z.B. zumindest ein Linearweggeber in das Gehäuse der Lenkradmesswaage integriert. Der Istwert der Ausfahrlängen kann auch aus einer Messung einer zum Ausfahren benötigten Drehbewegung abgeleitet werden.

Vorteilhaft werden die Sollwerte für die Ausfahrlängen der ersten Klemmmittel der Lenkradmesswaage abhängig vom jeweiligen Lenkradtyp oder Fahrzeugtyp vorgegeben.

Bei einer weiteren Ausführung der erfindungsgemäßen Lenkradmesswaage sind zweite Klemmmittel vorhanden. Diese sind vom einem oberen Bereich des Zentralgehäuses derart elektromotorisch ausfahrbar, dass diese mit einem oberhalb des Lenkrades befindlichen Element des Fahrzeuges verklemmen.

Diese Ausführung der Erfindung bietet den Vorteil, dass nach einer Verklemmung der Lenkradmesswaage mit dem Lenkrad dieses Gesamtanordnung komplett fixierbar ist. Damit wird es ermöglicht, dass ein von der Lenkradmesswaage bestimmter Lenkradwinkel erhalten bleibt, auch wenn zwischenzeitlich Einstellarbeiten am Fahrwerk des Fahrzeuges vorgenommen werden. Vorteilhaft sind die zweiten Klemmmittel in Form eines elektromotorisch ausfahrbaren Klemmstabs ausgeführt, der die oben beschriebene Gesamtanordnung vorteilhaft an einer Frontscheibe des Fahrzeuges verklemmt. Auch hier ist es vorteilhaft, wenn eine Regelung des beim elektromotorischen Ausfahren des zweiten Klemmmittels aufgebrachten Moments vorgenommen wird.

Hierdurch können die insbesondere auf eine Frontscheibe aufgebrachten Druckkräfte auf Werte begrenzt werden, welche z.B. dem Verklebezustand der Frontscheibe und damit dem Aushärtungsgrad der Verklebematerialien angemessen sind.

Nach Erfassung des gewünschten Winkelmesswertes und eventuell nach Abschluss dazugehöriger Einstellarbeiten am Fahrwerk eines dazugehörigen Fahrzeuges, wird die Lenkradmesswaage von einem Werker wieder vom Lenkrad abgenommen. Hierzu müssen die ausgefahrenen Klemmmittel wieder entspannt werden. Die kann mechanisch durch Betätigung eines entsprechenden Ausrastmechanismus geschehen. Die dann frei beweglichen Klemmarme und der Klemmstab können nun von einem Werker manuell in eine Ausgangsposition in das Gehäuse wieder zurückgeschoben werden.

Bei einer weiteren Variante ist die Lenkradmesswaage so ausgeführt, dass die ersten oder zweiten Klemmmittel elektromotorisch in einen Ruhezustand einfahrbar sind. Hierdurch wird nicht nur, wie oben bereits ausgeführt wurde, das Aufsetzen der Lenkradmesswaage auf ein Lenkrad erleichtert, sondern auch die Abnahme der Lenkradmesswaage nach Abschluss der Messungen und eventueller Einstellarbeiten am Fahrwerk eines Fahrzeugs. Das Einfahren der Klemmmittel kann von einem Werker durch eine Betätigung von Tastern ausgelöst werden, die auf der Oberseite des Gehäuses der Lenkradmesswaage angeordnet sind.

Die Erfindung wird anhand von einem, in den Figuren dargestellten bevorzugten Ausführungsbeispiel nachfolgend näher erläutert. Dabei zeigen
- Fig. 1: eine Draufsicht auf eine Ausführungsform einer gemäß der Erfindung gestalteten Lenkradmesswaage, deren Klemmarme elektromotorisch ausgefahren sind und symmetrisch mit dem Kranz und den Speichen eines Lenkrades verklemmen, und
- Fig. 2: die Ausführungsform von Fig. 1 in einer seitlichen Schnittdarstellung.

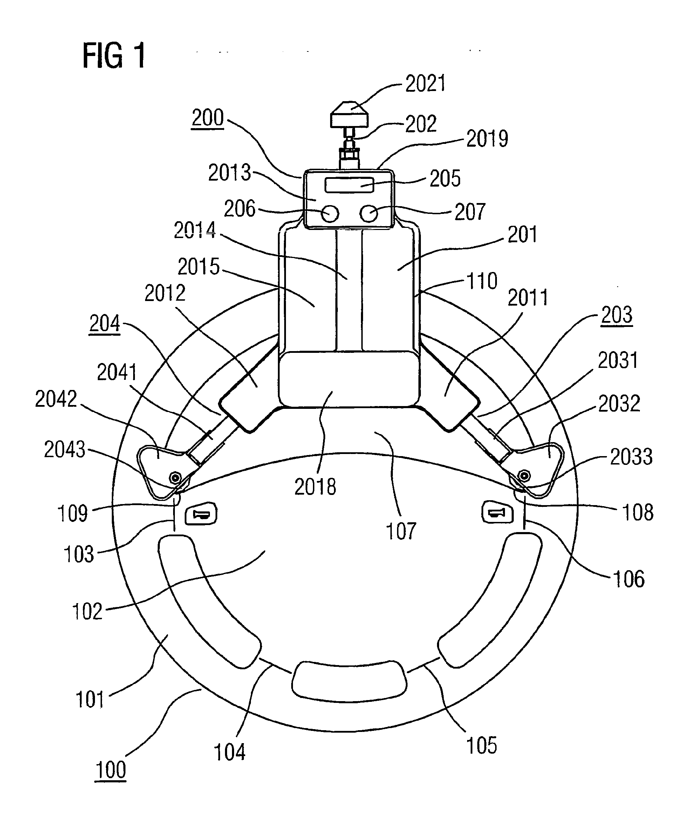

In Fig. 1 ist beispielhaft ein sogenanntes Vierspeichenlenkrad 100 in einer Draufsicht gezeigt. Lenkräder dieser Art werden insbesondere bei Kraftfahrzeugen für den Personentransport eingesetzt. Ein Lenkradkranz 101, der zur eigentlichen manuellen Handhabung durch Personen bestimmt ist, besteht beispielsweise aus einem innen geschäumten und außen mit Leder überzogenen Griffring. Der Lenkradkranz 101 im Beispiel der Fig. 1 ist über beispielsweise vier Lenkradspeichen 103, 104, 105 und 106 mit einer Lenkradnabe 102 verbunden. Die Lenkradspeichen sind dabei in der unteren Hälfte des Lenkradkranzes 101 angeordnet, während sich in der oberen Hälfte ein speichenfreier Freibereich 107 ergibt. Dieser oberhalb der Lenkradnabe liegende Bereich 107 hat üblicherweise die Aufgabe, einem Fahrer die Durchsicht auf Anzeigeelemente des Fahrzeugs, z.B. Geschwindigkeitsanzeigen, Tankfüllstand und dergleichen zu ermöglichen. Das unterhalb dieses Freibereiches liegende Volumen innerhalb des Lenkradkranzes 101 wird weitgehend von einer Lenkradnabe 102 eingenommen. Diese enthält einen Mittentopf insbesondere zur Aufnahme von Montagemitteln des Lenkrades an einer dahinter liegenden Lenksäule eines Kraftfahrzeuges und zur Aufnahme weiterer Komponenten, z.B. einer Airbageinheit.

Beim Gebrauch eines Lenkrades, das der Art des in Fig. 1 beispielhaft dargestellten Lenkrades 100 entspricht, im praktischen Fahrbetrieb sind die Innenwinkelbereiche 108, 109, die oberhalb der Lenkradnabe 102 rechts und links in den Nischen bei den Übergängen der Lenkradspeichen 103, 106 zur Innenseite des Lenkradkranzes 101 liegen, von besonderer Bedeutung. Diese werden von einem Fahrzeugführer häufig benutzt, um in diesen Bereichen den Lenkradkranz zu umgreifen und die beiden Hände auf den Lenkradspeichen 103, 106 und der Oberseite der Lenkradnabe 102, die dem Freibereich 107 zugewandt ist, abzulegen.

In dieser Haltung kann von einem Fahrzeugführer sehr genau wahrgenommen werden, ob bei einer Geradeausfahrt des Fahrzeugs das Lenkrad 100 tatsächlich waagerecht steht. Dementsprechend sind im Beispiel der Figur 1 diese Innenwinkelbereiche 108, 109 ebenfalls besonders gut geeignet, um bei der Fahrzeugmontage die aktuelle Lenkradstellung durch Eingriff einer Lenkradmesswaage 200 zu erfassen. Der dabei gemessene Lenkradwinkel wird vorzugsweise per Funk von der Lenkradmesswaage zu entfernten Steuereinrichtung übermittelt, die diesen Wert dann bei der Bestimmung der für eine optimale Achsgeometrieeinstellung erforderlichen Parameter einrechnen.

So weist die in Fig. 1 beispielhaft dargestellte Ausführungsform für eine gemäß der Erfindung gestaltete Lenkradmesswaage 200 ein Gehäuse 201 auf, das zur Auflage auf einen oberen Bereich 110 des Lenkradkranzes 101 vorgesehen ist. Weiterhin sind erfindungsgemäß erste Klemmmittel vorhanden, die in Form von zwei elektromotorisch aus- und einfahrbaren Klemmarmen 203, 204 ausgeführt sind. Bei der in Fig. 1 dargestellten vorteilhaften Ausführung ist zusätzlich ein zweites Klemmmittel vorhanden, dass in Form eines in vertikaler Richtung aus-und einfahrbaren Klemmstabes 202 ausgeführt ist.

Im Gehäuse 201 sind eine Fülle von Komponenten der erfindungsgemäßen Lenkradmesswaage untergebracht. So ist eine Winkelmessvorrichtung eingebaut, um den gewünschten Winkelmesswert für die Abweichung von der horizontalen Lage zu erfassen. Zur kabellosen Weiterleitung dieses Messwertes an externe Verarbeitungsvorrichtungen ist vorteilhaft eine Funkdatenschnittstelle integriert. Weiterhin sind Elemente zur Energieversorgung und elektronischen Steuerung des gesamten Gerätes vorhanden. Zur Ausführung der Erfindung besonders wichtig sind elektrische Antriebe zum Ein- und Ausfahren der beiden Klemmarme 203, 204 und des zusätzlichen Klemmstabes 202. Schließlich ist auf der Oberseite noch ein Anzeige- und Bedienbereich 2013 vorhanden. Dieser weist im Beispiel der Fig. 1 eine digitale Anzeigeeinrichtung 205 auf, auf der z.B. der Status und die inneren Betriebszustände des Gerätes angezeigt werden. Die Anzeigeeinrichtung 205 wird auch bei der Inbetriebnahme der Lenkradmesswaage zur Kalibrierung benötigt. Weiterhin sind ein Taster 206 zur Aktivierung des elektromotorischen Ausfahrens der Klemmmittel und ein Taster 207 zur Aktivierung des elektromotorischen Einfahrens der Klemmmittel vorhanden.

In Fig. 1 ist die Lenkradmesswaage 200 in einem Zustand gezeigt, bei dem die beiden Klemmarme 203, 204 ausgefahren sind, der Klemmstab 202 sich aber noch im eingefahrenen Zustand befindet. Bei der in Fig. 1 gezeigten vorteilhaften Ausführung gehen die beiden Klemmarme 203, 204 von einer Unterseite 2018 des Gehäuses 201 seitlich und beidseitig nach unten ab. Zur Verbesserung der mechanischen Stabilität sind Führungsstutzen 2011, 2012 für die beiden Klemmarme 203, 204, beidseitig am Gehäuse 201 angeformt. Vorteilhaft sind die Klemmarme 203, 204 als Teleskopstangen 2031, 2041 ausgeführt, welche in den Führungsstutzen 2011, 2012 geführt werden.

An den Kopfenden der Teleskopstangen 2031, 2041 befinden sich bei der Ausführung von Fig. 1 zum einen Auflageplatten 2032, 2042 zur Abstützung der ausgefahrenen Klemmarme auf der Oberseite des Lenkradkranzes 101. Weiterhin befinden sich an den Kopfenden Klemmrollen 2033, 2043 zur Verklemmung in den Nischen 108, 109 zwischen der Innenseite des Lenkradkranzes 101 und den Oberseiten der beiden Lenkradspeichen 108, 109, welche an den Freibereich 107 oberhalb der Lenkradnabe 102 angrenzen. Wie es oben bereits ausgeführt wurde, sind diese Innenwinkelbereiche 108, 109 bevorzugte Stellen, an denen Fahrer das Lenkrad 100 umfassen. Diese sind somit auch gut zum Eingriff der elektromotorisch ausfahrbaren ersten Klemmmittel und der darauf folgenden Messung der Horizontallage, insbesondere durch Erfassung einer Winkelabweichung davon, geeignet. Für eine exakte Messung ist erforderlich, dass sich Klemmrollen 2033, 2043 absolut symmetrisch und frei von Verkantungen in die Innenwinkelbereiche 108, 109 einlegen. Dies wird durch die erfindungsgemäße elektromotorische Ausfahrbarkeit der Klemmarme 203, 204 erheblich erleichtert.

Gemäß einer bevorzugten weiteren Ausführung der Erfindung können die tatsächlichen. Ausfahrlängen der Klemmarme 203, 204 nach Ende eines Ausfahrvorganges überprüft werden. Hierzu können im Gehäuse 201 oder z.B. in den Führungsstutzen 2011, 2012 entweder zusätzliche Längen- oder Wegmesseinrichtungen untergebracht sein. Oder es werden die Ausfahrlängen der Klemmarme 203, 204 über eine Zeitmessvorrichtung durch eine Kalkulation mit der mittleren Ausfahrgeschwindigkeit der Klemmarme ermittelt. Hiermit kann bei der in Fig. 1 dargestellten Ausführung festgestellt werden, ob die Klemmrollen 2033, 2043 nach Ende des Ausfahrvorganges tatsächlich in den gewünschten Endpositionen der Innenwinkelbereiche 108, 109 zu liegen gekommen sind. Durch Signalisierungen, z.B. über den Anzeige- und Bedienbereich 2013, kann bei Auftreten von Abweichungen der tatsächlichen Ausfahrlängen von vorgegebenen Sollwerten ein Werker z.B. darauf hingewiesen werden, dass möglicherweise eine Fehlpositionierung der Lenkradmesswaage vorliegt. In dieser Phase können vorteilhaft auch zusätzlich die von den Antrieben der Klemmarme aufgebrachten Momente so geregelt werden, dass beim Einpressen der Klemmrollen 2033, 2043 keine Beschädigungen am Lenkradkranz 101 auftreten.

Gemäß einer weiteren, in Fig. 1 bereits dargestellten Ausführung der Erfindung ist ein zusätzlicher Klemmstab 202 vorhanden, der zur Abstützung an einem oberhalb bzw. vor dem Lenkrades befindlichen Bestandteil des Fahrzeuges dient, z.B. zur Abstützung an einem Innendeckenteil oder auf der Innenseite der Frontscheibe des Fahrzeugs. Hiermit kann die Gesamtanordnung aus dem Lenkrad 100 mit aufgesetzter und eingespannter Lenkradmesswaage 200 zusätzlich gegen Verdrehung gesichert werden. Derartige Verdrehungen können z.B. durch Einstellarbeiten an der Vorderachse des dazugehörigen Fahrzeuges bis in das Lenkrad übertragen werden. Dabei könnte der von der Lenkradmesswaage ermittelte Lenkradwinkel wieder verändert werden, und es würde wieder die Gefahr von Fehleinstellungen der Achsengeometrie des Fahrzeuges bestehen.

Bei der in Fig. 1 gezeigten Ausführung ist der zusätzliche Klemmstab 202 in einem separaten, annähernd.vertikal auf der Vorderseite des Gehäuses 201 verlaufenden Führungskanal 2014 gelagert. Dieser Führungskanal 2014 tritt in einem oberen Bereich 2019 aus dem Gehäuse 201 aus. In Fig. 1 ist das Kopfende des Klemmstabes 202 zu sehen, auf dem ein elastischer, rutschhemmender Auflagestopfen 2021 angebracht ist. Hierüber stützt sich der Klemmstab 202 im ausgefahrenen Zustand an einem darüber befindlichen Karosserieteil des Fahrzeugs ab, z.B. der Innenseite der Frontscheibe. Vorteilhaft tritt hinter dem Führungskanal 2014 das Gehäuse 201 zurück und ist somit zusätzlich als eine Griffmulde 2015 ausgeführt. Die gesamte Lenkradmesswaage kann somit von einem Werker durch Umfassen des Führungskanals gehandhabt werden, also insbesondere auf den Lenkradkranz 101 aufgelegt bzw. von dort wieder entnommen werden.

Der besondere Vorteil der erfindungsgemäßen Ausführung der Lenkradmesswaage liegt also darin, dass möglichst alle vorhandenen Klemmmittel, d.h. im Beispiel der Fig. 1 die beiden Klemmarme 203, 204 und ein eventuell zusätzlich vorhandener Klemmstab 202 elektromotorisch aus- und wieder einfahrbar sind. Der Einlegevorgang der Lenkradmesswaage in ein Lenkrad wird dadurch erheblich vereinfacht und somit die Gefahr von Fehleinlegungen reduziert. Weiterhin können die dabei von deren Antrieben aufgebrachten Momente gegebenenfalls auf vorgegebene Sollwerte begrenzt werden. Schließlich sind eventuell zusätzlich die Ausfahrlängen insbesondere der auf das Lenkrad selbst einwirkenden Klemmmittel automatisch erfassbar. Treten Abweichungen von vorgegebenen Sollwerten auf, so sind das Indikatoren für eine mögliche Fehleinlegung und Fehleinklemmung der Lenkradmesswaage. Hieraus können Signale ausgelöst werden, die dann eine Werker zu einer möglichen Korrektur der Einlageposition der Lenkradmesswaage auf einem Lenkrad veranlassen.

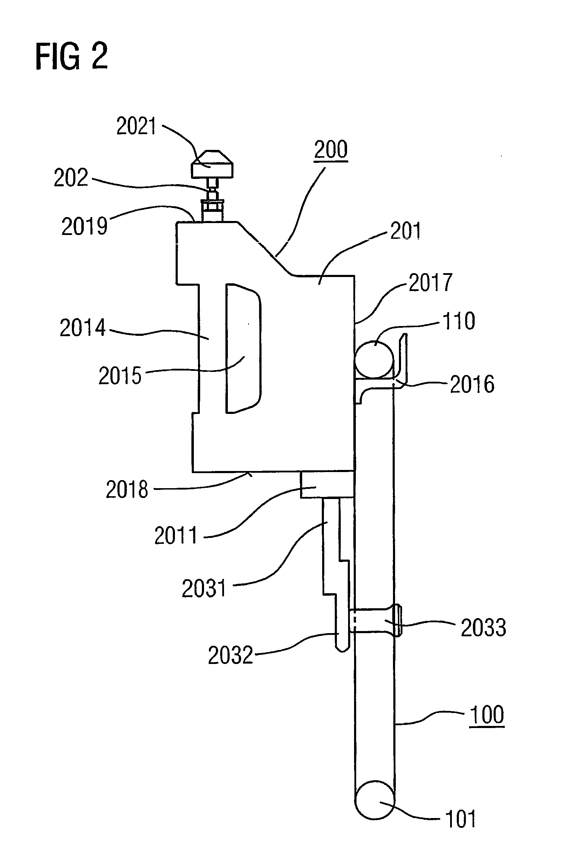

Fig. 2 zeigt die Ausführung der Lenkradmesswaage 200 von Fig. 1 in einer seitlichen. Schnittdarstellung. Die dargestellten Bezugszeichen entsprechen dabei den bereits an Fig. 1 erläuterten Elementen. Zur Vermeidung von Wiederholungen soll auf die dortigen Erläuterungen verwiesen werden.

Aus Fig. 2 ist erkennbar, dass das Gehäuse 201 über eine Rückseite 2017 auf den Lenkradkranz 101 aufgelegt wird. Dabei erfolgt die Auflage vorteilhaft in einem oberen Bereich des Lenkradkranzes 101, insbesondere einem Hochpunkt 101. Zur Erleichterung des Auflagevorganges kann auf der Rückseite 2017 des Gehäuses 201 ein zusätzliches Anlageelement 2016 vorhanden sein. Im Beispiel ist dieses als ein Einhängewinkel ausgeführt. Dieser ist für die Erzielung einer Verklemmung der ausgefahrenen Klemmarme 203, 204 mit dem Lenkradkranz zwar nicht erforderlich. Das zusätzliche Anlageelement 2016 bietet aber im ersten Moment der Auflage der Lenkradmesswaage für einen Werker einen ersten Fixpunkt, bevor die Klemmarme elektromotorisch ausgefahren werden. Nach Erreichen der gewünschten Klemmwirkung sollte das Anlageelement 2016 nicht mehr in mechanischem Kontakt mit dem Lenkradkranz stehen.

## Patentansprüche

1. Lenkradmesswaage (200) mit Mitteln zur Erfassung der Winkelstellung eines Lenkrades (100), mit
a) einem Gehäuse (201) das zur Auflage auf einem oberen Bereich (110) eines Lenkradkranzes (101) vorgesehen ist, und
b) ersten Klemmmitteln (203,204), welche vom einem unteren Bereich (2018) des Gehäuses (201) derart elektromotorisch ausfahrbar sind, dass diese mit dem Lenkradkranz (101) verklemmen.

2. Lenkradmesswaage (200) nach Anspruch 1, wobei die ersten Klemmmittel (203,204) zwei elektromotorisch synchron ausfahrbare Klemmarme (203,204) aufweisen.

3. Lenkradmesswaage (200) nach Anspruch 2, wobei die Klemmarme (203,204) beidseitig vom Gehäuse (201) nach unten abgehend ausfahrbar sind.

4. Lenkradmesswaage (200) nach Anspruch 2 oder 3, wobei das Gehäuse (201) Führungsstutzen (2011,2012) für die Klemmarme (203,204) aufweist.

5. Lenkradmesswaage (200) nach Anspruch 2, 3 oder 4, wobei die Klemmarme (203,204) Teleskopstangen (2031,2041) aufweisen, an deren Enden Klemmrollen (2033,2043) quer zur Ausfahrrichtung angeordnet sind.

6. Lenkradmesswaage (200) nach einem der vorangegangenen Ansprüche, wobei die ersten Klemmittel (203,204) derart elektromotorisch ausfahrbar sind, dass diese auf der Innenseite des Lenkradkranzes (101) verklemmen.

7. Lenkradmesswaage (200) nach Anspruch 6, wobei die ersten Klemmmittel (203,204) derart elektromotorisch ausfahrbar sind, dass diese an Übergängen (108,109) des Lenkradkranzes (101) zu Lenkradspeichen (106,103) verklemmen.

8. Lenkradmesswaage (200) nach Anspruch 6, wobei die ersten Klemmmittel (203,204) derart elektromotorisch ausfahrbar sind, dass diese an den oberhalb der Lenkradnabe (102) liegenden Übergängen (108,109) des Lenkradkranzes (101) zu Lenkradspeichen (106,103) verklemmen.

9. Lenkradmesswaage (200) nach einem der vorangegangenen Ansprüche, mit einer Regelung der beim elektromotorischen Ausfahren der ersten Klemmmittel (203,204) aufgebrachten Momente.

10. Lenkradmesswaage (200) nach einem der vorangegangenen Ansprüche, mit
a) Mitteln zur Messung der Ausfahrzeit der ersten Klemmmittel (203,204),
b) Mitteln zur Bestimmung der Ausfahrlängen der ersten Klemmmittel (203,204) aus der gemessenen Ausfahrzeit und einem vorgegebenen Sollwert der Ausfahrgeschwindigkeit,
c) Mitteln zum Vergleich der bestimmten Ausfahrlängen mit vorgegebenen Sollwerten, und mit
d) Mitteln zur Signalisierung, falls beim Vergleich unzulässige Abweichungen der bestimmten Ausfahrlängen von den Sollwerten auftreten.

11. Lenkradmesswaage (200) nach einem der Ansprüche 1 bis 9, mit
a) Mitteln zur Messung der Ausfahrlängen der ersten Klemmmittel (203,204),
b) Mitteln zum Vergleich der gemessenen Ausfahrlängen mit vorgegebenen Sollwerten, und mit
c) Mitteln zur Signalisierung, falls beim Vergleich unzulässige Abweichungen der gemessenen Ausfahrlängen von den Sollwerten auftreten.

12. Lenkradmesswaage (200) nach Anspruch 10 oder 11, wobei die Sollwerte für die Ausfahrlängen der ersten Klemmmittel (203,204) abhängig vom jeweiligen Lenkradtyp oder Fahrzeugtyp vorgegeben werden.

13. Lenkradmesswaage (200) nach einem der vorangegangenen Ansprüche, mit zweiten Klemmmitteln (202), die vom einem oberen Bereich (2018) des Zentralgehäuses (201) derart elektromotorisch ausfahrbar sind, dass diese mit einem oberhalb des Lenkrades (100) befindlichen Element des Fahrzeuges verklemmen.

14. Lenkradmesswaage (200) nach Anspruch 13, wobei die zweiten Klemmmittel (202) einen elektromotorisch ausfahrbaren Klemmstab (202) ausweisen.

15. Lenkradmesswaage (200) nach Anspruch 13 oder 14, wobei die zweiten Klemmmittel (202) an einer Frontscheibe des Fahrzeuges verklemmen.

16. Lenkradmesswaage (200) nach einem der Ansprüche 13 bis 15, mit einer Regelung des beim elektromotorischen Ausfahren des zweiten Klemmmittels (202) aufgebrachten Moments.

17. Lenkradmesswaage (200) nach einem der vorangegangenen Ansprüche, wobei die ersten oder zweiten Klemmmittel (202,203, 204) elektromotorisch in einen Ruhezustand einfahrbar sind.

## Claims

1. Steering wheel measuring scales (200) with means for detecting the angular position of a steering wheel (100), having
a) a housing (201) which is provided for mounting on an upper region (110) of a steering wheel rim (101),
b) first clamping means (203, 204) which can be deployed by electric motor drives from a lower region (2018) of the housing (201) such that these clamp to the steering wheel rim (101).

2. Steering wheel measuring scales (200) according to claim 1, with the first clamping means (203, 204) having two electric motor-driven clamping arms (203, 204) which can be deployed in synchrony.

3. Steering wheel measuring scales (200) according to claim 2, with it being possible to deploy the clamping arms (203, 204) downwards on both sides of the housing (201).

4. Steering wheel measuring (200) according to claim 2 or 3, with the housing (201) having guide connecting pieces (2011, 2012) for the clamping arms (203, 204).

5. Steering wheel measuring scales (200) according to claim 2, 3 or 4, with the clamping arms (203, 204) having telescopic bars (2031, 2041), at the ends of which clamp rollers (2033, 2043) are arranged transversally to the deployment direction.

6. Steering wheel measuring scales (200) according to one of the preceding claims, with the first clamping means (203, 204) being deployable by electric motor drives such that they clamp to the inside of the steering wheel rim (101).

7. Steering wheel measuring scales (200) according to claim 6, with the first clamping means (203, 204) being deployable by electric motor drives such that they clamp to transitions (108, 109) of the steering wheel rim (101) to form steering wheel spokes (106, 103).

8. Steering wheel measuring scales (200) according to claim 6, with the first clamping means (203, 204) being deployable by electric motor drives such that they clamp to the transitions (108, 109) between the steering wheel rim (101) lying above the steering wheel hub (10) and the steering wheel spokes (106, 103).

9. Steering wheel measuring scales (200) according to one of the preceding claims, having a control of the torque applied during the electric motor drive deployment of the first clamping means (203, 204).

10. Steering wheel measuring scales (200) according to one of the preceding claims, having
a) means for measuring the deployment time of the first clamping means (203, 204)
b) means for determining the deployment lengths of the first clamping means (203, 204) from the measured deployment time and a predetermined setpoint value of the deployment speed;
c) means for comparing the determined deployment lengths with predetermined setpoint values and with
d) means for signalling, if inadmissible deviations of the specific deployment lengths from the setpoint values occur during comparison

11. Steering wheel measuring scales (200) according to one of claims 1 to 9, having
a) means for measuring the deployment lengths of the first clamping means (203, 204)
b) means for comparing the measured deployment lengths with predetermined setpoint values and with
c) means for signalling, if inadmissible deviations of the measured deployment lengths from the setpoint values occur during comparison.

12. Steering wheel measurement scales (200) according to claim 10 or 11, with the setpoint values for the deployment lengths of the first clamping means (203, 204) being predetermined as a function of the respective steering wheel type or motor vehicle type.

13. Steering wheel measuring scales (200) according to one of the preceding claims, with second clamping means (202), which can be deployed by electric motor drives from an upper region (2018) of the central housing (201) such that these clamp onto an element of the motor vehicle located above the steering wheel (100).

14. Steering wheel measuring scales (200) according to claim 13, with the second clamping means (202) having a clamping bar (202) able to deployed by electric motor drives.

15. Steering wheel measuring scales (200) according to claim 13 or 14, with the second clamping means (202) clamping to a windscreen of the motor vehicle.

16. Steering wheel measuring scales (200) according to one of claims 13 to 15, with a control of the torque applied during the electric motor drive deployment of the second clamping means (202).

17. Steering wheel measuring scales (200) according to one of the preceding claims, with the first or second clamping means (202, 203, 204) being able to be retracted by electric motor drives in an idle state.

## Revendications

1. Dispositif de mesure pour le positionnement d'un volant (200) comprenant des moyens de détection de la position angulaire d'un volant (100), comprenant
a) un boîtier (201) qui est prévu pour l'appui sur une zone supérieure (110) d'une jante de volant (101), et
b) des premiers moyens de serrage (203, 204), qui peuvent être sortis d'une zone inférieure (2018) du boîtier (201) par un moteur électrique de telle sorte que ces moyens bloquent avec la jante de volant (101).

2. Dispositif de mesure pour le positionnement d'un volant (200) selon la revendication 1, les premiers moyens de serrage (203, 204) ayant deux bras de serrage (203, 204) pouvant être sortis de façon synchrone à l'aide d'un moteur électrique.

3. Dispositif de mesure pour le positionnement d'un volant (200) selon la revendication 2, les bras de serrage (203, 204) pouvant être sortis des deux côtés du boîtier (201) vers le bas.

4. Dispositif de mesure pour le positionnement d'un volant (200) selon la revendication 2 ou 3, le boîtier (201) ayant des tubulures de guidage (2011, 2012) des bras de serrage (203, 204).

5. Dispositif de mesure pour le positionnement d'un volant (200) selon la revendication 2, 3 ou 4, les bras de serrage (203, 204) ayant des tiges télescopiques (2031, 2041), sur les extrémités desquelles des galets de serrage (2033, 2043) sont disposés transversalement à la direction de sortie.

6. Dispositif de mesure pour le positionnement d'un volant (200) selon l'une quelconque des revendications précédentes, les premiers moyens de serrage (203, 204) pouvant être sortis à l'aide d'un moteur électrique de telle sorte qu'ils bloquent sur le côté intérieur de la jante de volant (101).

7. Dispositif de mesure pour le positionnement d'un volant (200) selon la revendication 6, les premiers moyens de serrage (203, 204) peuvent être sortis à l'aide d'un moteur électrique de telle sorte qu'ils bloquent sur des zones de transition (109, 109) entre la jante de volant (101) et les rayons du volant (106, 103).

8. Dispositif de mesure pour le positionnement d'un volant (200) selon la revendication 6, les premiers moyens de serrage (203, 204) pouvant être sortis à l'aide d'un moteur électrique de telle sorte qu'ils bloquent sur les zones de transition (108, 109) situées au-dessus du moyeu de volant (102) entre la jante de volant (101) et les rayons du volant (106, 103).

9. Dispositif de mesure pour le positionnement d'un volant (200) selon l'une quelconque des revendications précédentes, comprenant un réglage des couples appliqués lors de la sortie des premiers moyens de serrage (203, 204) à l'aide d'un moteur électrique.

10. Dispositif de mesure pour le positionnement d'un volant (200) selon l'une quelconque des revendications précédentes, comprenant
a) des moyens pour la mesure du temps de sortie des premiers moyens de serrage (203, 204),
b) des moyens pour déterminer les longueurs de sortie des premiers moyens de serrage (203, 204) à partir du temps de sortie mesuré et d'une valeur de consigne prédéfinie de la vitesse de sortie,
c) des moyens pour la comparaison des longueurs de sortie définies avec des valeurs de consigne prédéfinies, et
d) des moyens pour la signalisation, si des écarts inacceptables entre les longueurs de sortie déterminées et les valeurs de consigne apparaissent lors de la comparaison.

11. Dispositif de mesure pour le positionnement d'un volant (200) selon l'une quelconque des revendications 1 à 9, comprenant
a) des moyens pour la mesure des longueurs de sortie des premiers moyens de serrage (203, 204),
b) des moyens pour la comparaison des longueurs de sortie mesurées avec des valeurs de consigne prédéfinies, et
c) des moyens pour la signalisation, si des écarts inacceptables entre les longueurs de sortie mesurées et les valeurs de consigne apparaissent lors de la comparaison.

12. Dispositif de mesure pour le positionnement d'un volant (200) selon la revendication 10 ou 11, les valeurs de consigne pour les longueurs de sortie des premiers moyens de serrage (203, 204) étant prédéfinies en fonction du type de volant ou du type de véhicule concerné.

13. Dispositif de mesure pour le positionnement d'un volant (200) selon l'une quelconque des revendications précédentes, comprenant des seconds moyens de serrage (202), qui peuvent être sortis d'une zone (2018) supérieure du boîtier central (201) à l'aide d'un moteur électrique de telle sorte que ces moyens bloquent avec un élément du véhicule se trouvant au-dessus du volant (100).

14. Dispositif de mesure pour le positionnement d'un volant (200) selon la revendication 13, les seconds moyens de serrage (202) ayant une barre de serrage (202) pouvant être sortie à l'aide d'un moteur électrique.

15. Dispositif de mesure pour le positionnement d'un volant (200) selon la revendication 13 ou 14, les seconds moyens de serrage (202) bloquant sur un pare-brise du véhicule.

16. Dispositif de mesure pour le positionnement d'un volant (200) selon l'une quelconque des revendications 13 à 15, comprenant un réglage du couple appliqué lors de la sortie par un moteur électrique du second moyen de serrage (202).

17. Dispositif de mesure pour le positionnement d'un volant (200) selon l'une quelconque des revendications précédentes, les premiers ou seconds moyens de serrage (202, 203, 204) pouvant être rentrés dans un état de repos à l'aide d'un moteur électrique.
